# EUROPÄISCHE PATENTSCHRIFT

(11) **EP 2 036 516 B1**
(45) Veröffentlichungstag und Bekanntmachung des Hinweises auf die Patenterteilung: **13.05.2015**
(21) Anmeldenummer: 08016124.3
(22) Anmeldetag: 12.09.2008
(51) Int. Cl.: A61C 13/00

(54) **Rohlinganordnung**
Blank assembly
Kit comprenant une ébauche

(30) Priorität: 14.09.2007 DE 102007043837
(43) Veröffentlichungstag der Anmeldung: 18.03.2009
(73) Patentinhaber: Ivoclar Vivadent AG, 9494 Schaan (LI)
(72) Erfinder: Galehr, Klaus, 6824 Schlins (AT)
(74) Vertreter: Baronetzky, Klaus

(56) Entgegenhaltungen:
- WO-A1-02/09612
- DE-A1- 19 714 223
- DE-C1- 19 612 699
- US-A1- 2005 276 672
- US-A1- 2007 172 787

## Beschreibung

Die Erfindung betrifft eine Rohlinganordnung, insbesondere für die Herstellung von Dentalersatzteilen, gemäß dem Oberbegriff von Anspruch 1.

Rohlinge für Dentalrestaurationsteile werden typischerweise spannabhebend bearbeitet, um eine Anpassung an die erwünschte Formgebung zu erzielen. Während bei der Anpassung des Dentalrestaurationsteils vom Zahnarzt oder aber in der Regel von dem Zahntechniker Feinarbeiten und Justierungen vorgenommen werden müssen, werden typischerweise blockförmig hergestellte Rohlinge vorab in Form gebracht, um die Anpassungsarbeiten auf ein vernünftiges Mass zu beschränken.

Dies gilt im besonderen Masse für Dentalrestaurationsteile und entsprechende Rohlinge aus Keramik. Keramische Materialien - gerade Zirkondioxid - sind besonders hart, so dass es wünschenswert ist, die spannabhebende Bearbeitung, die in dem Dentallabor vorzunehmen ist, auf ein Minimum zu reduzieren.

Andererseits lassen sich Keramikrohlinge ausgesprochen günstig in Blockform herstellen. Typischerweise wird daher ein Rohling in Blockform basierend auf dem geeignet ausgewählten Rohmaterial gepresst und in einem Sinterofen gesintert.

Im Hinblick auf die besondere Härte von Keramiken wie beispielsweise Zirkon-basierenden Keramiken ist es auch bereits bekannt geworden, nicht das fertig gesinterte Produkt, das sehr hart ist, spannabhebend zu bearbeiten, sondern ein vorgesintertes Produkt, das eine bereits für die spannabhebende Bearbeitung ausreichende Festigkeit aufweist. Hierdurch lässt sich auch der Verschleiß der für die spannabhebende Bearbeitung verwendeten Werkzeuge, also beispielsweise Fräser oder Drehmeißel, deutlich reduzieren.

Für die spannabhebende Bearbeitung muss der Rohling in geeigneter Weise in der Werkstückaufnahme der spanabhebenden Vorrichtung aufgenommen sein. Hierzu wird häufig ein Haltestift eingesetzt, dessen Außengestaltung für die Werkstückaufnahme geeignet ausgebildet ist und der in eine Bohrung in den Rohling eingeklebt ist. Die Verankerung der Rohlinge für die spannabhebende Bearbeitung ist insofern jedoch ausgesprochen aufwendig und auch fehlerträchtig. Insbesondere muss sicher gestellt sein, dass eine vorgegebene Position für die Fixierung zwischen dem Stift, der in der Werkstückaufnahme gehalten ist, und dem Rohling, gewährleistet ist.

Ferner ist es auch bereits vorgeschlagen worden, einen Steckstift mit einer Klebefläche auszugestalten, auf welcher der Rohling aufgeklebt ist. Dies erlaubt insbesondere auch die Verwendung unterschiedlich großer Rohlinge mit dem gleichen Werkzeugaufnahme-Fixierstift. Typischerweise ist eine derartige Klebefläche plan, um einen besonders guten Kontakt zu einer Oberfläche des Rohlings, der zunächst blockförmig ist, zu gewährleisten. Hierdurch bedingt ist die räumlich-fixierte Festlegung des Rohlings schwierig, und man behilft sich bei einer derartigen Ausgestaltung typischerweise damit, dass ein Differenzmaß, das eine Seitenfläche des Rohlings in Beziehung zu einer Seitenfläche des Steckstifts setzt, gebildet wird, und basierend hierauf die Verbindung zwischen dem Steckstift und dem Rohling festgelegt wird.

Zwar ist dies grundsätzlich möglich und auch maschinell zu automatisieren, was im Hinblick auf die zu erstellenden Stückzahlen erforderlich ist.

Gerade bei unterschiedlichen Werkstückaufnahmen ist es jedoch erforderlich, unterschiedliche Steckstifte zu verwenden, die dementsprechend unterschiedliche Abmessungen haben. Die Kombination derartiger unterschiedlicher Steckstifte, in entsprechender Anzahl der verwendeten Werkstückaufnahmen, mit unterschiedlichen Rohlingen führt jedoch zu einer Multiplikation der möglichen Kombinationen, so dass eine derartige Differenzwertfestlegung in der Praxis signifikant zu aufwendig wäre und sich daher aus verständlichen Gründen nicht durchgesetzt hat.

Aus DE 197 14 223 A1 ist eine Rohlinganordnung mit einem spanabhebend zu bearbeitenden Rohling, insbesondere aus Dentalmaterial und für die Herstellung dentaler Restaurationsteile. Diese Rohlinganordnung weist einen Halter, der mit dem Rohling fest verbunden ist, und einen mit dem Halter verbundenen Adapter auf. Der Adapter hat eine Wirkfläche, über welche die Rohlingeinheit in oder an der Werkstückaufnahme einer spanabhebenden Vorrichtung lösbar befestigtbar ist. Der Halter weist eine von dem Adapter abgewandte Seite auf, an oder auf welcher der Rohling aufnehmbar ist. Der Adapter ist wieder verwendbar und kann in der Aufnahme einer Bearbeitungsmaschine verbleiben.

Daher liegt der Erfindung die Aufgabe zur Grunde, eine Rohlinganordnung gemäß dem Oberbegriff von Anspruch 1 zu schaffen, die eine auch für die großtechnische Fertigung von angepassten, also spanabhebend bearbeiteten, Rohlingen zuverlässig geeignet ist.

Diese Aufgabe wird erfindungsgemäß durch Anspruch 1 gelöst. Vorteilhafte Weiterbildungen ergeben sich aus den abhängigen Ansprüchen.

Durch die Realisierung eines separaten Halters ist stets eine eindeutige Zuordnung zwischen der Relativposition des Rohlings und einem beliebig zu wählenden Referenzpunkt des Halters möglich. Diese ist im Grunde unabhängig von einer Ausgestaltung einer Wirkfläche des erfindungsgemäß vorgesehenen Adapters, der den Eingriff gegenüber der Werkstückaufnahme sicherstellt. Die Wirkfläche kann damit in beliebiger geeigneter Weise und auch kompliziert gehalten sein, so dass eine kompakte Realisierung möglich ist, ohne dass auf die Dimensionierung und Relativanordnung des Rohlings Rücksicht genommen werden müsste.

Verschieden große Rohlinge lassen sich dementsprechend kurzerhand zentral auf einer Stirnfläche des Halters anbringen und gegenüber dessen Schaft justieren. Nachdem die Relativposition des Schafts, dem einer entsprechenden Ausnehmung des Adapters geführt ist, für jede Ausgestaltung des Adapters und damit die entsprechende Werkstückaufnahme bekannt ist, ist die erforderliche Anzahl von Dimensionierungen noch praktikabel. Wenn beispielsweise 20 verschiedene Werkstückaufnahmen mit 30 verschiedenen Rohlingen kombinierbar sein sollen, ist die Bereitstellung von der Summe der entsprechenden Abmessungen, also von 50 Abmessungen erforderlich, während theoretisch bei Lösungen ohne die Erfindung mit einer entsprechenden Anzahl von Werkstückaufnahmen und Rohlingen 20 * 30, also 600 Maße bereit gehalten werden müssten, was in der Praxis indiskutabel wäre. Durch die Aufteilung in einen Halter und einen Adapter ergibt sich ein reduzierter Organisationsaufwand.

Der Halter kann in beliebiger geeigneter Weise an dem Rohling befestigt sein. Beispielsweise kann der Rohling den Halter seitlich deutlich überragen und an einer Stirnfläche einer Platte aufgelegt sein, die den Halter oben abschließt.

Durch den Halter, der den Rohling trägt, und der separat von dem Adapter handhabbar ist, ist eine mit stets dem gleichen Klebeautomat zu realisierende Verbindung zwischen Halter und Rohling realisierbar. Der Klebeautomat muss also insofern nicht umgerüstet werden, oder ein neuer Klebeautomat angeschafft werden, wenn Rohlinge für andere Werkstückaufnahmen behandelt werden sollen. Dies stellt einen erheblichen Vorteil gerade bei industrieller Fertigung von Dentalrestaurationsteilen in großen Stückzahlen dar, gerade auch bei der Verwendung von Keramikblöcken als Rohlinge.

Die erfindungsgemäße Rohlinganordnung weist bevorzugt einen Adapter auf, der mit stets der gleichen Aufnahme für den Halter versehen ist. Hierdurch ist sichergestellt, dass unabhängig von der Gestaltung der Werkstückaufnahme Rohlinge sicher in der Werkstückaufnahme gehalten werden können. Überraschend ist die Sicherheit nicht dadurch beeinträchtigt, dass die zusätzlich Verbindung zwischen Halter und Adapter hergestellt sein muss. Die Passgenauigkeit der Aufnahme zwischen Halter und Adapter ist bevorzugt so gewählt, dass bei hergestellter Verbindung Halter und Adapter praktisch einstückig wirken, auch wenn tatsächlich eine Trennung möglich ist.

Bei Bedarf kann die Halterung durch teilweise federnde Ausgestaltung des Übergangs zwischen Halter und Adapter noch verbessert werden, wobei es sich versteht, dass bevorzugt eine vergleichsweise harte Feder eingesetzt wird, die den Bearbeitungskräften des Werkzeugs der spanabhebenden Vorrichtung standhalten kann.

Erfindungsgemäß besonders günstig ist es insofern, wenn der Halter so ausgelegt ist, dass er Scherkräfte sowohl gegenüber dem Adapter als auch gegenüber dem Rohling besonders gut übertragen kann. Hierzu ist es beispielsweise möglich, einen kurzen und vergleichsweise kräftigen Stecker in eine Sacklochbohrung des Adapters eintreten zu lassen, und zwar in passgenauer Führung. Die Kraftübertragung gegenüber dem Rohling kann weiter dadurch unterstützt werden, dass der Adapter seitliche Stützflansche in Form eines Kragens aufweist, der eine Platte oder einen entsprechenden Flansch des Halters dort massiv unterstützt. Auch Druckkräfte, also Kräfte in axialer Richtung, lassen sich so gut abfangen.

Die Aufnahmen zwischen Halter und Adapter hat bei dieser Ausführungsform praktisch die Form von T's, die ineinander eingesetzt sind.

Es versteht sich, dass auch eine beliebige andere Ausgestaltung von Halter und Adapter und deren Übergang möglich ist. Durch die Realisierung einer vergleichsweise dünnen Stützfläche des Halters, die von einem entsprechenden Stützkragen oder einer Stirnfläche des Adapters unterstützt wird, lässt sich mit vergleichsweise geringem Materialaufwand auch eine breite Stirnfläche des Halters als Klebefläche bereitstellen.

Rohling, Halter und Adapter können hier in beliebiger geeigneter Weise gestaltet sein. Sowohl runde als auch von der Kreisform abweichende Ausgestaltungen sind je möglich, wobei es aber jedenfalls bevorzugt ist, dass die Verbindung zwischen Adapter und Halter drehfest und momentensicher ist, also sowohl Scherkräften als auch Drehkräften, die bei der Bearbeitung durch die spanabhebenden Vorrichtung in die Rohlinge eingeleitet werden können, widerstehen.

Erfindungsgemäß besonders günstig ist es, wenn eine Stirnfläche des Halters eine flache und für Klebstoff gut haftende Fläche bereitstellt, deren Erstreckung mindestens der Erstreckung des Keramikblocks - in der jeweiligen Richtung betrachtet - entspricht. Hierdurch ist sichergestellt, dass für die Klebeverbindung eine möglichst große Stützfläche zur Verfügung steht, denn seitliche Bearbeitungskräfte auf den Rohling müssen von der Klebeverbindung aufgefangen werden, so dass eine breite Kontaktfläche zwischen Halter und Rohling die Ablösekräfte reduziert.

Erfindungsgemäß besonders günstig ist es, wenn die Steckbarkeit des Halters in oder an den Adapter mit einfachen Mitteln realisiert ist und auch das Lösen der Verbindung bei Bedarf rasch möglich ist. Hierzu sind beliebige geeignete Verbindungstechniken bekannt, wobei es sich versteht, dass besonders günstig ist, wenn auch Drehkräfte momentensicher übertragbar sind.

Der Halter für den Rohling weist eine Stirnseite auf, die von dem Adapter wegweist und an oder auf welcher der Rohling aufnehmbar ist.

Erfindungsgemäß besonders günstig ist es, dass der Halter einer runde oder eckige Platte aufweist, deren von dem Adapter abgewandte Fläche den Rohling trägt.

Erfindungsgemäß besonders günstig ist es, dass der Rohling an dem Halter flächig befestigt ist und den Halter an mindestens einer Stelle überragt.

Erfindungsgemäß besonders günstig ist es, dass der Rohling an dem Halter flächig befestigt ist und den Halter an mindestens einer Stelle überragt.

Erfindungsgemäß besonders günstig ist es, dass der Rohling auf dem Halter kraftschlüssig befestigt ist.

Erfindungsgemäß besonders günstig ist es, dass der Rohling auf dem Halter aufgeklebt, aufgeschweist und/oder aufgebondet ist.

Erfindungsgemäß besonders günstig ist es, dass der Rohling und der Halter mindestens teilweise ineinander gepresst oder aneinander verschraubt sind oder in sonstiger Weise miteinander formschlüssig verbunden sind.

Erfindungsgemäß besonders günstig ist es, dass der Halter und der Rohling gegeneinander verspannt sind und dass die Vorspannung der Verspannung insbesondere größer als die von der spanabhebenden Vorrichtung erzeugten Bearbeitungskraft ist.

Erfindungsgemäß besonders günstig ist es, dass der Halter einen Anschlussbereich für den Rohling aufweist, der insbesondere Flanschartige Vorsprünge bietet und besonders bevorzugt plattenförmig ausgebildet ist und von dem aus sich ein Schaft wegerstreckt, der mit dem Adapter zusammenwirkt.

Erfindungsgemäß besonders günstig ist es, dass der Halter einen Schaft aufweist, der für die formschlüssige Aufnahme in dem Adapter ausgebildet ist.

Erfindungsgemäß besonders günstig ist es, dass der Halter gegenüber dem Adapter drehschlüssig festgelegt ist und insbesondere einen in axialer Richtung weisenden Anschlag aufweist.

Erfindungsgemäß besonders günstig ist es, dass der Schaft in einem Sacklock des Adapters aufgenommen ist, insbesondere in desen oberen Bereich.

Erfindungsgemäß besonders günstig ist es, dass der Schaft des Halter oberhalb einer Hinterschneidung endet, die eine Wirkfläche gegenüber der Werkstückaufnahme der spanabhebenden Vorrichtung bildet und insbesondere dort einen Formschluss bietet.

Erfindungsgemäß besonders günstig ist es, dass der Schaft des Halters wenigstens eine Hinterschneidung aufweist, die insbesondere wenigstens teilweise umlaufend ist.

Erfindungsgemäß besonders günstig ist es, dass der Halter, insbesondere sein Schaft, eine Bohrung oder ein Innengewinde für die Festlegung in dem Adapter aufweist, die insbesondere zu einer Durchgangsbohrung in dem Adapter passen.

Es ist besonders günstig, wenn der Halter, insbesondere sein Schaft, der Adpater und/oder der Rohling eine Markierung aufweist, insbesondere eine mechanische oder eine farbliche Markierung, die das Zueinanderpassen von entsprechenden Teilen der Rohlinganordung symbolisieren.

Erfindungsgemäß besonders günstig ist es, dass der Halter, insbesondere sein Schaft, der Adpater und/oder der Rohling einen Strichcode aufweist, insbesondere einen mechanischen oder einen farblichen Strichcode, die das Zueinanderpassen von entsprechenden Teilen der Rohlinganordung symbolisieren.

Erfindungsgemäß besonders günstig ist es, dass der Halter, insbesondere sein Schaft, der Adapter und/oder Rohling einen Sensor, einen Transmitter und/oder einen Chip aufweisen, über welchen die Verwendung des je betreffenden Typs des Rohlings, des Halters und/oder des Adapters signalisierbar ist.

Erfindungsgemäß besonders günstig ist es, dass der Halter und/oder Adapter eine Sollbruchstelle aufweisen, die bei Belastung in der spanabhebenden Vorrichtung nachgibt.

Erfindungsgemäß besonders günstig ist es, dass mindestens zwei Adapter vorgesehen sind, welche unterschiedliche Wirkflächen aufweisen, die in die Werkstückaufnahmen unterschiedlicher spannabhebender Vorrichtung einsetzbar sind, und dass die mindestens zwei Adapter einander gleiche Aufnahme für den Halter aufweisen.

Erfindungsgemäß besonders günstig ist es, dass die Verbindung zwischen Halter und Adapter schwingungsfest gesichert ist.

Gemäß einer weiteren vorteilhaften Ausgestaltung ist es vorgesehen, dass der Rohling mit an dem Halter flächig befestigt ist und dass der Halter den Rohling an mindestens einer Stelle überragt.

Gemäß einer weiteren vorteilhaften Ausgestaltung ist es vorgesehen, dass Rohling und Halter mindestens teilweise ineinander gepresst oder aneinander verschraubt sind, oder in sonstiger Weise miteinander verbunden sind.

Gemäß einer weiteren vorteilhaften Ausgestaltung ist es vorgesehen, dass der Rohling und der Halter miteinander festverbunden oder so fest gegeneinander verspannt sind, dass die Vorspannung der Verspannung oder Halterkraft der Verbindung größer als die von der spanabhebenden Vorrichtung erzeugten Bearbeitungskraft ist.

Gemäß einer weiteren vorteilhaften Ausgestaltung ist es vorgesehen, dass die erfindungsgemäße Rohlinganordnung an dem Halter einen Flansch ausbildet, der insbesondere plattenförmig ausgebildet ist und von aus sich ein Schaft oder ein Steckstummel wegerstreckt, der mit dem Adapter zusammenwirkt.

Gemäß einer weiteren vorteilhaften Ausgestaltung ist es vorgesehen, dass der Schaft des Halters für die formschlüssige Aufnahme in dem Adapter ausgebildet ist.

Gemäß einer weiteren vorteilhaften Ausgestaltung ist es vorgesehen, dass der Schaft als Steckstummel ausgebildet ist und in einer Aufnahme oder einem Sackloch des Adapters aufgenommen ist, insbesondere in dessen oberen Bereich.

Gemäß einer weiteren vorteilhaften Ausgestaltung ist es vorgesehen, dass der Schaft des Halters oberhalb einer Hinterschneidung endet, die die Wirkfläche gegenüber der Werkstückaufnahme der spanabhebenden Vorrichtung bildet und insbesondere dort einen Formschluss bietet.

Gemäß einer weiteren vorteilhaften Ausgestaltung ist es vorgesehen, dass der Halter und/oder der Rohling und/oder der Adapter eine Markierung oder eine Codierung aufweisen, die das Zueinanderpassen von entsprechenden Teilen der Rohlinganordnung symbolisieren. Die Markierung kann auch als mechanischer oder farbiger Strichcode ausgebildet sein.

Weitere Vorteile, Einzelheiten und Merkmale ergeben sich aus der nachstehenden Beschreibung von zwei Ausführungsbeispielen der Erfindung anhand der Zeichnung.

Es zeigen:
- Fig. 1: eine schematische Seitenansicht einer Ausführungsform einer erfindungsgemäßen Rohlinganordnung; und
- Fig. 2: eine Ansicht einer weiteren Ausführungsform einer erfindungsgemäßen Rohlinganordnung.

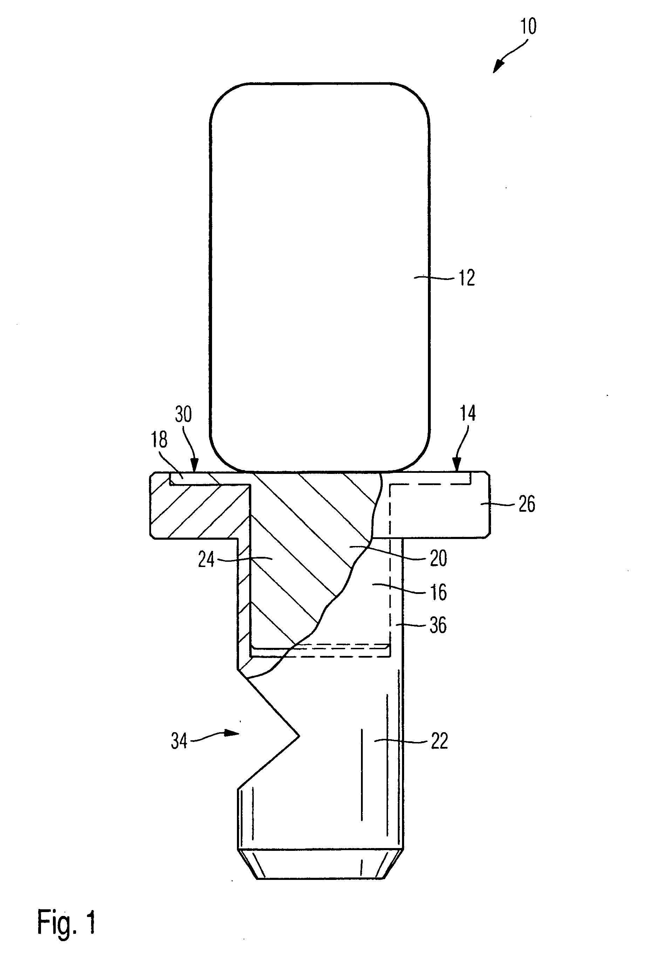

Die in Fig. 1 dargestellte Rohlinganordnung 10 weist einen Rohling 12 auf, der auf einer Stirnseite 14 eines Halters 16 aufgeklebt ist. Bevorzugt ist der Rohling 12 ein quaderförmiges Keramikelement mit abgerundeten Ecken. Er ist dafür bestimmt, spanabhebend bearbeitet zu werden, um ein Dentalrestaurationsteil zu erzeugen. Hierzu liegt er mit einer seiner Seitenflächen bündig an der Stirnseite 14 an. Die Art der Verklebung, wie sie erfindungsgemäß verwendet wird, ist im Stand der Technik bekannt, wobei es sich versteht, dass die Haltekräfte der Klebeverbindung die bei der spanabhebenden Bearbeitung auf den Rohling eingeleiteten Kräfte deutlich übersteigen.

Der Halter 16 ist im Wesentlichen T-förmig ausgebildet. Er weist einen umlaufenden Flansch 18 auf, dessen Erstreckung die Breite des Rohlings 12 deutlich übersteigt, so dass auch Rohlinge deutlich größerer Abmessungen dort aufnehmbar sind.

Ferner weist der Halter 16 einen Steckstummel 20 auf, der im Wesentlichen die gleiche Höhe und Breite aufweist, oder aber - wie im dargestellten Ausführungsbeispiel - eine Länge oder Höhe, die die Breite um nicht mehr als 50% übersteigt. Im dargestellten Ausführungsbeispiel beträgt das Höhen-/Breitenverhältnis 1,4:1.

In dem dargestellten Ausführungsbeispiel ist der Halter 16 vollständig versenkt in einem Adapter 22 aufgenommen. Hierzu weist der Adapter 22 eine Aufnahme 24 auf, die nach der Art einer Sacklochbohrung ausgebildet ist und in ihren Abmessungen genau zu dem Steckstummel 20 passt. Dementsprechend ist in dem dargestellten Ausführungsbeispiel die Aufnahme 24 als Sackloch ausgebildet.

Den Flansch 18 des Halters 16 unterstützend weist der Adapter 22 ferner seitliche Stützflansche 26 auf, die nach der Art eines Kragens ausgebildet sind und dem Adapter 22 im Querschnitt betrachtet ebenfalls im Wesentlichen die Form eines T geben. Die Stützflansche 26 des Adapters haben eine deutlich größere Materialstärke als der Flansch 18 des Halters, wobei beispielsweise ein Verhältnis von 4:1 vorgesehen ist, aber auch zwischen 2:1 oder 10:1 möglich ist.

Im dargestellten Ausführungsbeispiel ist der Flansch 18 zudem versenkt in einer Vertiefung 30 des Stützflansches 26 aufgenommen. Es versteht sich, dass diese Massnahme fakultativ ist. Wenn eine derartige Anordnung realisiert ist, ist es auch möglich, eine Verdrehsicherung zwischen Halter 16 und Adapter 22 am Außenumfang des Flansches 18 bzw. am Außenumfang der Vertiefung 30 auszubilden.

Alternativ kann eine Verdrehsicherung auch durch eine entsprechende Formgebung von Steckstummel 20 und Aufnahme 24, die als Sackloch ausgebildet ist, realisiert sein, indem diesen beiden Teilen eine von der Kreisform abweichende Form mindestens an einer Stelle gegeben wird.

In dem dargestellten Ausführungsbeispiel ist der Adapter 22 in besonderer Weise geformt, um in einer speziellen Werkstückaufnahme einer spanabhebenden Vorrichtung, die hier nicht dargestellt ist, aufgenommen werden zu können. Hierzu ist im Beispielsfalle eine rechtwinklige Kerbe 34 als Hinterschneidung ausgebildet. Die Kerbe 34 erstreckt sich unterhalb des Sacklochs 24, so dass sie die Aufnahme des Halters 16 dort nicht beeinträchtigt. Entsprechende Werkstückaufnahmen sind bekannt und können in beliebiger geeigneter Weise gestaltet sein, wobei es gerade vom Fräsmaschinenhersteller abhängig zahlreiche unterschiedliche Werkstückaufnahmen gibt.

Wenn der Rohling 12 in einer anderen als der hier dargestellten spanabhebenden Vorrichtung bearbeitet werden soll, lässt sich der Adapter 22 ohne Weiteres austauschen, und durch einen anderen Adapter 22 ersetzten, der jedoch exakt die gleiche Aufnahme 24 aufweist, so dass der gleiche Halter 16 eingesetzt werden kann.

Die Verbindung zwischen Adapter 22 und Halter 16 ist spielfrei, so dass die Entfernung des Halters 16 aus dem Adapter 22 lediglich mit einer gewissen Kraft möglich ist. In dem dargestellten Ausführungsbeispiel ist die seitliche Materialstärke des Adapters 22 in den Steckstummel 20 umgebend recht gering. Die dort vorgesehene Seitenwand 36 kann bei Bedarf auch einwärts vorgespannt sein, so dass sie sich bei nicht eingestecktem Halter 16 etwas einwärts wölbt. Durch die Aufnahme des Halters 16 liegt dann die Seitenwand 36 unter Vorspannung an den Seitenflächen des Steckstummels 20 an.

Nachdem stets der gleiche Halter verwendet werden kann, lässt sich der Adapter ausgesprochen einfach in einer exakten Position auf dem Halter aufkleben. Dies kann beispielsweise dadurch geschehen, dass das stets gleiche Vorsprungmaß des Flansches 18 gegenüber dem Steckstummel 20 verwendet wird, und der Rohling 12, dessen Breite festliegt und von Rohling zu Rohling unterschiedlich ist, in einem vorgegebenen Abstand von dem Rand des Flansches 18 aufgeklebt wird. Die Realisierung einer derartigen Klebeverbindung ist auch mit einem Klebeautomaten möglich.

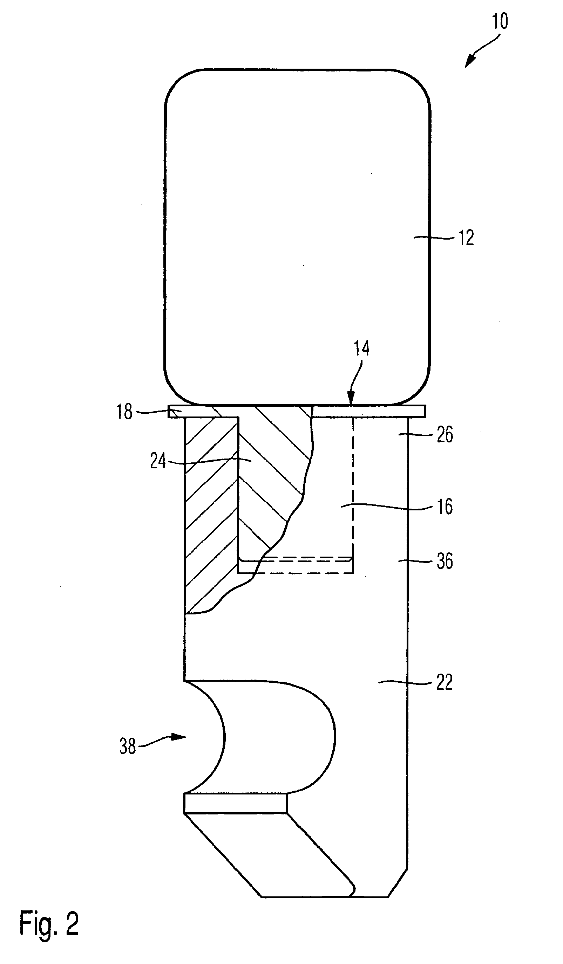

Eine modifizierte Ausgestaltung eines Adapters ist aus Fig. 2 ersichtlich. Dort weisen die gleichen Bezugszeichen auf die gleichen oder entsprechende Teile hin. Bei dieser Ausgestaltung hat der Adapter 22 einen größeren Durchmesser und ist für eine andere Werkstückaufnahme bestimmt, bei der anstelle der Kerbe 34 eine besonders gestaltete Hinterschneidung 38 vorgesehen ist. Die Aufnahme 24 ist hingegen in gleicher Weise wie bei der Ausführungsform gemäß Fig. 1 des Adapters gestaltet, und der Halter 16 entspricht dem in Fig. 1 dargestellten Halter.

In dem dargestellten Ausführungsbeispiel ist ein etwas breiterer Rohling 10 vorgesehen, der dementsprechend mit einer größeren Breite auf der Stirnseite 14 des Halters 16 aufliegt. Der Flansch 18 ist zwar seitlich unterstützt, jedoch ist bei dieser Ausführungsform des Adapters 22 der Stützflansch 26 nicht nach der Art eines Kragens ausgebildet, sondern wird unmittelbar durch die Seitenwände 36 des Adapters 22 gebildet.

## Patentansprüche

1. Rohlinganordnung, mit einem spanabhebend zu bearbeitenden Rohling (12), insbesondere aus Dentalmaterial und für die Herstellung dentaler Restaurationsteile, mit einem Halter (16), der mit dem Rohling (12) fest verbunden ist, und einem mit dem Halter (16) verbundenen Adapter (22), wobei der Adapter (22) eine Wirkfläche aufweist, über welche die Rohlingeinheit in oder an der Werkstückaufnahme einer spanabhebenden Vorrichtung lösbar befestigtbar ist, wobei der Halter (16) eine von dem Adapter (22) abgewandte Stirnseite (14) aufweist, an oder auf welcher der Rohling (12) aufnehmbar ist, **dadurch gekennzeichnet, dass** der Halter einen Schaft (20) aufweist, der in einer entsprechenden Ausnehmung des Adapters geführt ist.

2. Rohlinganordnung nach Anspruch 1, **dadurch gekennzeichnet, dass** die Stirnseite (14) eine runde oder eine der kreisrunden Form abweichende Außenkontur aufweist, und insbesondere der Halter (16) eine eckige Platte aufweist, deren von dem Adapter (22) abgewandte Fläche den Rohling (12) trägt.

3. Rohlinganordnung nach einem der vorhergehenden Ansprüche 1 oder 2, **dadurch gekennzeichnet, dass** die Stirnseite an einem flanschartigen Abschnitt (18) ausgebildet ist, der einstückig mit einem Schaft (20) des Halters (16) in Verbindung steht.

4. Rohlinganordnung nach Anspruch 3, **dadurch gekennzeichnet, dass** der flanschartige Abschnitt (18) den mit dem Adapter (22) zusammenwirkenden Schaft (20) radial überragt.

5. Rohlinganordnung nach einem der vorhergehenden Ansprüche, **dadurch gekennzeichnet, dass** der Rohling (12) die Stirnseite (14) an wenigstens einer Stelle radial überragt.

6. Rohlinganordnung nach einem der vorhergehenden Ansprüche, **dadurch gekennzeichnet, dass** der Rohling (12) auf die Stirnseite (14) des Halters (16) kraftschlüssig befestigt ist.

7. Rohlinganordnung nach einem der vorhergehenden Ansprüche, **dadurch gekennzeichnet, dass** der Rohling (12) auf der Stirnseite (14) des Halters (16) aufgeklebt und/oder aufgebondet und/oder aufgeschraubt oder aufgeschweisst ist.

8. Rohlinganordnung nach einem der vorhergehenden Ansprüche, **dadurch gekennzeichnet, dass** der Halter (16) und der Adapter (22) fest oder lösbar miteinander verbunden sind.

9. Rohlinganordnung nach einem der vorhergehenden Ansprüche, **dadurch gekennzeichnet, dass** der Halter (16), insbesondere der Schaft (20) des Halters (16), mit einer Aufnahme (24) des Adapters (22) zusammenwirkt.

10. Rohlinganordnung nach einem der vorhergehenden Ansprüche, **dadurch gekennzeichnet, dass** der Halter (16), insbesondere der Schaft (20) des Halters (16), und der Adapter (22) axial und/oder drehschlüssig miteinander verbunden sind.

11. Rohlinganordnung nach einem der vorhergehenden Ansprüche, **dadurch gekennzeichnet, dass** der Halter (16), insbesondere der Schaft (20) des Halters (16), und der Adapter (22) mindestens teilweise miteinander verpresst und/oder verspannt und/oder verschraubt und/oder verklebt sind.

12. Rohlinganordnung nach einem der vorhergehenden Ansprüche, **dadurch gekennzeichnet, dass** der Schaft des Halters (16) wenigstens eine Hinterschneidung (38) aufweist, die insbesondere wenigstens teilweise umlaufend ist.

13. Rohlinganordnung nach einem der vorhergehenden Ansprüche, **dadurch gekennzeichnet, dass** der Halter (16), insbesondere sein Schaft, eine Bohrung oder ein Innengewinde für die Festlegung in dem Adapter (22) aufweist, die insbesondere zu einer Durchgangsbohrung in dem Adapter (22) passen.

14. Rohlinganordnung nach einem der vorhergehenden Ansprüche, **dadurch gekennzeichnet, dass** der Rohling (12), der Halter (16), insbesondere sein Schaft, und/oder der Adapter (22) einen Strichcode aufweisen, insbesondere einen mechanischen oder einen farblichen Strichcode.

15. Rohlinganordnung nach einem der vorhergehenden Ansprüche, **dadurch gekennzeichnet, dass** der Rohling (12), der Halter (16), insbesondere sein Schaft, und/oder der Adapter (22) einen Sensor, einen Transmitter und/oder einen Chip aufweisen.

16. Rohlinganordnung nach einem der vorhergehenden Ansprüche, **dadurch gekennzeichnet, dass** der Halter (16) und/oder der Adapter (22) eine Sollbruchstelle aufweisen, die bei Belastung in der spanabhebenden Vorrichtung nachgibt.

17. Rohlinganordnung nach einem der vorhergehenden Ansprüche, **dadurch gekennzeichnet, dass** mindestens zwei Adapter (22) vorgesehen sind, welche unterschiedliche Wirkflächen aufweisen, die in die Werkstückaufnahmen unterschiedlicher spanabhebender Vorrichtung einsetzbar sind, und dass die mindestens zwei Adapter (22) einander gleiche Aufnahmen (24) für den Halter (16) aufweisen.

18. Rohlinganordnung nach einem der vorhergehenden Ansprüche, **dadurch gekennzeichnet, dass** die Verbindung zwischen Halter (16) und Adapter (22) schwingungsfest gesichert ist.

19. Rohlinganordnung nach einem der vorhergehenden Ansprüche, **dadurch gekennzeichnet, dass** der Schaft (20) und/oder die Aufnahme (24) eine wenigstens teilweise rauhe und/oder glatte und/oder profilierte Oberfläche aufweist.

20. Rohlinganordnung nach einem der vorhergehenden Ansprüche, **dadurch gekennzeichnet, dass** der Schaft (20) und/oder die Aufnahme (24) wenigstens einen Vorsprung und/oder wenigstens eine Vertiefung aufweist, die einen Formschluss dieser Teile gegeneinander erlauben.

21. Rohlinganordnung nach einem der vorhergehenden Ansprüche, **dadurch gekennzeichnet, dass** der Schaft (20) und/oder die Aufnahme (24) zylindrisch oder konisch ausgebildet sind.

22. Rohlinganordnung nach einem der vorhergehenden Ansprüche, **dadurch gekennzeichnet, dass** der Querschnitt des Schaftes (20) und/oder der Querschnitt der Aufnahme (24) rund oder von einer kreisrunden Form abweichend ausgebildet ist.

23. Rohlinganordnung nach einem der vorhergehenden Ansprüche, **dadurch gekennzeichnet, dass** der Halter (16) wenigstens teilweise aus Stahl und/oder Kunststoff und/oder Aluminium und/oder Holz und/oder Glas besteht.

24. Rohlinganordnung nach einem der vorhergehenden Ansprüche, **dadurch gekennzeichnet, dass** der Adapter (22) aus Stahl und/oder Aluminium und/oder Kunststoff besteht.

25. Rohlinganordnung nach einem der vorhergehenden Ansprüche, **dadurch gekennzeichnet, dass** der Halter (16) und/oder Adapter (22) wenigstens teilweise mit Kunststoff ummantelt sind.

26. Rohlinganordnung nach einem der vorhergehenden Ansprüche, **dadurch gekennzeichnet, dass** der Rohling (12) aus Zirkonoxid oder Keramik oder Aluminium und/oder Kunststoff und/oder Stahl und/oder Holz besteht.

27. Rohlinganordnung nach einem der vorhergehenden Ansprüche, **dadurch gekennzeichnet, dass** der Rohling (12) einen runden und/oder einen von der kreisrunden Form abweichenden Querschnitt aufweist.

28. Rohlinganordnung nach einem der vorhergehenden Ansprüche, **dadurch gekennzeichnet, dass** der Rohling (12) unterschiedliche Farben aufweist.

29. Rohlinganordnung nach einem der vorhergehenden Ansprüche, **dadurch gekennzeichnet, dass** der Rohling (12) gegenüber dem Adapter (22) ausgerichtet ist.

30. Rohlinganordnung nach einem der vorhergehenden Ansprüche 3 bis 29, **dadurch gekennzeichnet, dass** der flanschartige Abschnitt (18) des Halters (16) an einer Stirnseite des Adapters (22) abgestützt ist.

31. Rohlinganordnung nach einem der vorhergehenden Ansprüche 3 bis 30, **dadurch gekennzeichnet, dass** der flanschartige Abschnitt (18) im Bereich seiner Außenkontur wenigstens eine sich in Längsrichtung des Halters (16) erstreckende Vertiefung und/oder eine sich in radialer Richtung erstreckende Ausnehmung aufweist.

32. Rohlinganordnung nach einem der vorhergehenden Ansprüche, **dadurch gekennzeichnet, dass** der Schaft (20) und/oder die Aufnahme (24) gestuft ausgebildet sind und wenigstens zwei Querschnittsbereiche mit unterschiedlichen Durchmessern aufweisen.

## Claims

1. A blank arrangement, with a blank (12) that is to be machined, in particular made of dental material and suitable for the production of dental restoration parts, with a holder (16) which is fixedly connected to the blank (12), and an adapter (22) connected to the holder (16), wherein the adapter (22) has an effective surface by means of which the blank unit can be releasably fastened in or at the work holding fixture of a machining device, wherein the holder (16) comprises a front side (14) which faces away from the adapter (22) and at or on which the blank (12) can be received, **characterized in that** the holder comprises a shank (20) which is guided in a corresponding recess of the adapter.

2. The blank arrangement as claimed in claim 1, **characterized in that** the front side (14) comprises an outer contour which is round or deviates form the circular shape, and **in that** in particular the holder (16) comprises a cornered panel whose surface which faces away from the adapter (22) carries the blank (12).

3. The blank arrangement as claimed in claim 1 or 2, **characterized in that** the front side (14) is formed on a fiange-like portion (18), which is integrally connected to a shank (20) of the holder (16).

4. The blank arrangement as claimed in claim 3, **characterized in that** the flange-like portion (18) protrudes radially beyond the shank (20) interacting with the adapter (22).

5. The blank arrangement as claimed in any of the preceding claims, **characterized in that** the blank (12) protrudes radially beyond the front side (14) at at least one position.

6. The blank arrangement as claimed in any of the preceding claims, **characterized in that** the blank (12) is attached to the front side (14) of the holder (16) in a non-positive manner

7. The blank arrangement as claimed in any of the preceding claims, **characterized in that** the blank (12) is glued to and/or bonded onto and/or screwed or welded on the front side (14) of the holder (16).

8. The blank arrangement as claimed in any of the preceding claims, **characterized in that** the holder (16) and the adapter (22) are connected to each other fixedly or releasably.

9. The blank arrangement as claimed in any of the preceding claims, **characterized in that** the holder (16), in particular the shank (20) of the holder (16), interacts with a receptacle (24) of the adapter (22).

10. The blank arrangement as claimed in any of the preceding claims, **characterized in that** the holder (16), in particular the shank (20) of the holder (16), and the adapter (22) are connected to each other axially and/or in a rotationally locked manner.

11. The blank arrangement as claimed in any of the preceding claims, **characterized in that** the holder (16), in particular the shank (20) of the holder (16), and the adapter (22) are at least partially pressed and/or braced and/or screwed and/or adhesively bonded to each other.

12. The blank arrangement as claimed in any of the preceding claims, **characterized in that** the shank of the holder (16) has at least one undercut (38), which in particular runs at least partially around it.

13. The blank arrangement as claimed in any of the preceding claims, **characterized in that** the holder (16), in particular its shank, has a bore or,an internal thread for the fixing in the adapter (22), which in particular match a through-bore in the adapter (22).

14. The blank arrangement as claimed in any of the preceding claims, **characterized in that** the blank (12), the holder (16), in particular its shank, and/or the adapter (22) have a bar code, in particular a mechanical or a colored bar code.

15. The blank arrangement as claimed in any of the preceding claims, **characterized in that** the blank (12), the holder (16), in particular its shank, and/or the adapter (22) have a sensor, a transmitter and/or a chip.

16. The blank arrangement as claimed in any of the preceding claims, **characterized in that** the holder (16) and/or the adapter (22) have a predetermined breaking point, which yields under loading in the machining device.

17. The blank arrangement as claimed in any of the preceding claims, **characterized in that** at least two adapters (22) are provided which have different effective surfaces that can be inserted into the work holding fixtures of different machining devices, and **in that** the at least two adapters (22) have receptacles (24) for the holder (16) that are equal to each other.

18. The blank arrangement as claimed in any of the preceding claims, **characterized in that** the connection between the holder (16) and the adapter (22) is secured against vibration.

19. The blank arrangement as claimed in any of the preceding claims, **characterized in that** the shank (20) and/or the receptacle (24) have an at least partially rough and/or smooth and/or profiled surface.

20. The blank arrangement as claimed in any of the preceding claims, **characterized in that** the shank (20) and/or the receptacle (24) have at least one projection and/or at least one depression, which allow a form fit of these parts with respect to each other.

21. The blank arrangement as claimed in any of the preceding claims, **characterized in that** the shank (20) and/or the receptacle (24) have a cylindrical or conical shape.

22. The blank arrangement as claimed in any of the preceding claims, **characterized in that** the cross section of the shank (20) and/or the cross section of the receptacle (24) are formed such that they are round or deviate from a circular shape.

23. The blank arrangement as claimed in any of the preceding claims, **characterized in that** the holder (16) consists at least partially of steel and/or plastic and/or aluminum and/or wood and/or glass.

24. The blank arrangement as claimed in any of the preceding claims, **characterized in that** the adapter (22) consists of steel and/or aluminum and/or plastic.

25. The blank arrangement as claimed in any of the preceding claims, **characterized in that** the holder (16) and/or the adapter (22) are at least partially enclosed in plastic.

26. The blank arrangement as claimed in any of the preceding claims, **characterized in that** the blank (12) consists of zirconium oxide or ceramic or aluminum and/or plastic and/or steel and/or wood.

27. The blank arrangement as claimed in any of the preceding claims, **characterized in that** the blank (12) comprises a round cross-section and/or a cross-section which deviates from the circular shape.

28. The blank arrangement as claimed in any of the preceding claims, **characterized in that** the blank (12) comprises different colors.

29. The blank arrangement as claimed in any of the preceding claims, **characterized in that** the blank (12) is oriented with respect to the adapter (22).

30. The blank arrangement as claimed in any of the preceding claims 3 to 29, **characterized in that** the flange-like portion (18) of the holder (16) is supported on a front side of the adapter (22).

31. The blank arrangement as claimed in any of the preceding claims 3 to 30, **characterized in that** in the area of its outer contour the flange-like portion (18) comprises at least one depression extending in the longitudinal direction of the holder (16) and/or one recess extending in the radial direction.

32. The blank arrangement as claimed in any of the preceding claims, **characterized in that** the shank (20) and/or the receptacle (24) are formed in a stepped manner and have at least two cross-sectional regions with different diameters.

## Revendications

1. Agencement d'ébauche, avec une ébauche (12) à usiner par enlèvement de matière, en particulier en matériau dentaire et pour la fabrication de pièces de restauration dentaire, avec un élément de retenue (16) qui est raccordé de façon fixe à l'ébauche (12), et avec un adaptateur (22) raccordé à l'élément de retenue (16), l'adaptateur (22) présentant une surface de travail par le biais de laquelle l'unité d'ébauche peut être fixée de façon détachable dans ou sur le porte-pièce d'un dispositif d'enlèvement de matière, l'élément de retenue (16) présentant un côté avant (14) éloigné de l'adaptateur (22) contre ou sur lequel l'ébauche (12) peut être reçue, **caractérisé en ce que** l'élément de retenue présente une tige (20) qui est guidée dans un creux correspondant de l'adaptateur.

2. Agencement d'ébauche selon la revendication 1, **caractérisé en ce que** lé côté avant (14) présente un contour extérieur rond ou s'écartant de la formé circulaire, et en particulier **en ce que** l'élément de retenue (16) présente une plaque angulaire dont la face éloignée de l'adaptateur (22) porte l'ébauche (12).

3. Agencement d'ébauche selon une des revendications précédentes 1 ou 2, **caractérisé en ce que** le côté avant est constitué sur un tronçon (18) de type bride qui est en liaison d'un seul tenant avec une tige (20) de l'élément de retenue (16).

4. Agencement d'ébauche selon la revendication 3, **caractérisé en ce que** le tronçon (18) de type bride dépasse radialement de la tige (20) coopérant avec l'adaptateur (22).

5. Agencement d'ébauche selon une des revendications précédentes, **caractérisé en ce que** l'ébauche (12) dépasse radialement du côté avant (14) en au moins un endroit.

6. Agencement d'ébauche selon une des revendications précédentes, **caractérisé en ce que** l'ébauche (12) est fixée à force sur le côté avant (14) de l'élément de retenue (16).

7. Agencement d'ébauche selon une des revendications précédentes, **caractérisé en ce que** l'ébauche (12) est collée et/ou liée et/ou vissée ou soudée sur le côté avant (14) de l'élément de retenue (16).

8. Agencement d'ébauche selon une des revendications précédentes, **caractérisé en ce que** l'élément de retenue (16) et l'adaptateur (22) sont raccordés l'un à l'autre de façon fixe ou de façon détachable.

9. Agencement d'ébauche selon une des revendications précédentes, **caractérisé en ce que** l'élément de retenue (16), en particulier la tige (20) de l'élément de retenue (16), coopère avec un logement (24) de l'adaptateur (22).

10. Agencement d'ébauche selon une des revendications précédentes, **caractérisé en ce que** l'élément de retenue (16), en particulier la tige (20) de l'élément de retenue (16), et l'adaptateur (22) sont raccordés l'un à l'autre axialement et/ou par liaison par rotation.

11. Agencement d'ébauche selon une des revendications précédentes, **caractérisé en ce que** l'élément de retenue (16), en particulier la tige (20) de l'élément de retenue (16), et l'adaptateur (22) sont assemblés l'un à l'autre au moins partiellement par compression et/ou serrage et/ou vissage et/ou collage.

12. Agencement d'ébauche selon une des revendications précédentes, **caractérisé en ce que** la tige de l'élément de retenue (16) présente au moins une contre-dépouille (38) qui est en particulier au moins partiellement circulaire.

13. Agencement d'ébauche selon une des revendications précédentes, **caractérisé en ce que** l'élément de retenue (16), en particulier sa tige, présente un alésage ou un filet intérieur pour l'immobilisation dans l'adaptateur (22) qui s'adaptent en particulier à un alésage traversant dans l'adaptateur (22).

14. Agencement d'ébauche selon une des revendications précédentes, **caractérisé en ce que** l'ébauche (12), l'élément de retenue (16), en particulier sa tige, et/ou l'adaptateur (22) présentent un code à barres, en particulier un code à barres mécanique ou en couleur.

15. Agencement d'ébauché selon une des revendications précédentes, **caractérisé en ce que** l'ébauche (12), l'élément de retenue (16), en particulier sa tige, et/ou l'adaptateur (22) présentent un capteur, un émetteur et/ou une puce.

16. Agencement d'ébauche selon une des revendications précédentes, **caractérisé en ce que** l'élément de retenue (16) et/ou l'adaptateur (22) présentent un point destiné à la rupture qui cède en cas de charge dans le dispositif d'enlèvement de matière.

17. Agencement d'ébauche selon une des revendications précédentes, **caractérisé en ce qu'**il est prévu au moins deux adaptateurs (22) qui présentent différentes surfaces de travail qui peuvent être introduites dans les porte-pièces de différents dispositifs d'enlèvement de matière, et **en ce que** les au moins deux adaptateurs (22) présentent des logements (24) mutuellement identiques pour l'élément de retenue (16).

18. Agencement d'ébauche selon une des revendications précédentes, **caractérisé en ce que** le raccordement entre l'élément de retenue (16) et l'adaptateur (22) est bloqué de façon à résister aux vibrations.

19. Agencement d'ébauche selon une des revendications précédentes, **caractérisé en ce que** la tige (20) et/ou le logement (24) présentent une surface au moins partiellement rugueuse et/ou lisse et/ou profilée.

20. Agencement d'ébauche selon une des revendications précédentes, **caractérisé en ce que** la tige (20) et/ou le logement (24) présentent au moins une saillie et/ou au moins une dépression qui permettent une liaison par complémentarité de forme de ces pièces entre elles.

21. Agencement d'ébauche selon une des revendications précédentes, **caractérisé en ce que** la tige (20) et/ou le logement (24) sont constitués de façon cylindrique ou conique.

22. Agencement d'ébauche selon une des revendications précédentes, **caractérisé en ce que** la section transversale de la tige (20) et/ou la section transversale du logement (24) sont constituées de façon ronde ou d'une façon qui s'écarte d'une forme circulaire.

23. Agencement d'ébauche selon une des revendications précédentes, **caractérisé en ce que** l'élément de retenue (16) est réalisé au moins partiellement en acier et/ou en matière plastique et/ou en aluminium et/ou en bois et/ou en.verre.

24. Agencement d'ébauche selon une des revendications précédentes, **caractérisé en ce que** l'adaptateur (22) est réalisé en acier et/ou en aluminium et/ou en matière plastique.

25. Agencement d'ébauche selon une des revendications précédentes, **caractérisé en ce que** l'élément de retenue (16) et/ou l'adaptateur (22) sont enveloppés au moins partiellement de matière plastique.

26. Agencement d'ébauche selon une des revendications précédentes, **caractérisé en ce que** l'ébauche (12) est réalisée en oxyde de zirconium ou en céramique ou en aluminium et/ou en matière plastique et/ou en acier et/ou en bois.

27. Agencement d'ébauche selon une des revendications précédentes, **caractérisé en ce que** l'ébauche (12) présente une section transversale ronde et/ou une section transversale s'écartant de la forme circulaire.

28. Agencement d'ébauche selon une des revendications précédentes, **caractérisé en ce que** l'ébauche (12) présente différentes couleurs.

29. Agencement d'ébauche selon une des revendications précédentes, **caractérisé en ce que** l'ébauche (12) est agencée en face de l'adaptateur (22).

30. Agencement d'ébauche selon une des revendications précédentes 3 à 29, **caractérisé en ce que** le tronçon (18) de type bride de l'élément de retenue (16) est appuyée sur un côté avant de l'adaptateur (22).

31. Agencement d'ébauche selon une des revendications précédentes 3 à 30, **caractérisé en ce que**, dans la zone de son contour extérieur, le tronçon (18) de type bride présente au moins une dépression s'étendant dans la direction longitudinale de l'élément de retenue (16) et/ou un creux s'étendant dans la direction radiale.

32. Agencement d'ébauche selon une des revendications précédentes, **caractérisé en ce que** la tige (20) et/ou le logement (24) sont constitués en gradins et présentent au moins deux zones de section transversale avec des diamètres différents.
